# EUROPEAN PATENT APPLICATION

(11) **EP 2 037 715 A2**
(43) Date of publication of application: **18.03.2009**
(21) Application number: 08162389.4
(22) Date of filing: 14.08.2008
(51) Int. Cl.: H04W 52/02, H04W 48/16

(54) **Mobile terminal and system scan method thereof**

(30) Priority: 13.09.2007 KR 20070092909
(71) Applicant: Samsung Electronics Co., Ltd., Suwon-si, Gyeonggi-do 442-743 (KR)
(72) Inventor: Jung, Hyo Jin, Yeongtong-gu, Suwon-si, Gyeonggi-do (KR); Kim, Seung Eop, Yeongtong-gu, Suwon-si, Gyeonggi-do (KR)
(74) Representative: Harrison Goddard Foote

(57) **Abstract**

A mobile terminal and system scan method thereof is provided for effectively acquiring system information even in a weak electrical field area using Received Signal Strength Indicator (RSSI). A system scan method for a mobile terminal includes evaluating, when the mobile terminal is turned on, received signal strengths of all channels registered to a preferred roaming list, creating a candidate channel list listing channels, each having a received signal strength greater than a threshold value, performing a full-scan process on the channels listed in the candidate channel list, and performing, when the full-scan process fails to find a system, a power saving process, wherein the full-scan process and power saving process are performed alternately until the system is found.

## Description

### BACKGROUND OF THE INVENTION

### 1. Field of the Invention:

The present invention relates to a mobile terminal. More particularly, the present invention relates to a mobile terminal and system scan method thereof that is capable of effectively acquiring system information.

### 2. Description of the Related Art:

In a cellular mobile communication system, a mobile terminal selects a base station by which it is served and receives system information from the selected base station. The mobile terminal provides the base station with its location and registration information using the system information such that the base station can serve the mobile terminal. When the system information is acquired, the mobile terminal registers the acquired system information (hereinafter referred to as "channel") to a Most Recently Used (MRU) list.

Here, the term "system" denotes a mobile communication system, provided by a specific mobile operator, including an analog and digital cellular system and a Personal Communication Service (PCS) system.

In the meantime, when a mobile terminal loses connection with the system, it performs system scan according to preset system scan conditions. According to the system scan conditions, the mobile terminal operates in a scan mode or a power saving process. The scan mode and power saving process are alternating. In order to acquire the system information, the mobile terminal scans the systems registered to the MRU list in priority order and then scans channels listed in a Preferred Roaming List (PRL) provided by the mobile operator in priority order of preference.

In a case that a number of the channels listed in the PRL, the operation mode of the mobile terminal is likely to be transitioned to the power saving process before the mobile terminal completes scanning all the channels in the scan mode, thereby elongating the time it takes to acquire the system information. Also, the conventional system scan method has a drawback in that it takes a long time to acquire the system information especially in a weak electrical field below -100 dB since most of the channels listed in the PRL are scanned in a micro-scan mode, whereas a small number of channels are scanned in a full-scan mode.

Therefore, a need exists for an improved system scan method and a terminal having the same, which is capable of effectively acquiring system information.

### SUMMARY OF THE INVENTION

An aspect of the present invention is to address at least the above-mentioned problems and/or disadvantages and to provide at least the advantages described below. Accordingly, an aspect of the present invention is to provide a mobile terminal and system scan method that is capable of acquiring system information quickly.

Also, another aspect of the present invention is to provide a mobile terminal and system that is capable of acquiring system effectively even in a weak electrical field area.

In accordance with an exemplary embodiment of the present invention, a system scan method for a mobile terminal is provided. The method includes evaluating, when the mobile terminal is turned on, received signal strengths of all channels registered to a preferred roaming list, creating a candidate channel list listing channels, each having a received signal strength greater than a threshold value, performing a full-scan process on the channels listed in the candidate channel list, and performing, when the full-scan process fails to find a system, a power saving process, wherein the full-scan process and power saving process are performed alternately until the system is acquired.

In accordance with another exemplary embodiment of the present invention, a system scan method for a mobile terminal is provided. The method includes updating, when a received signal strength reaches to a threshold level P of an acquired system, a candidate channel list by evaluating received signal strengths of all channels listed in a preferred roaming list and selecting the channels having a received signal strength greater than a preset level, performing, when the mobile terminal loses the system, a full-scan process on the channels of the updated candidate channel list, and performing, when a system is not found in the full-scan process, a power saving process, wherein the full-scan process and the power saving process are alternately performed until a system is found.

In accordance with another exemplary embodiment of the present invention, a mobile terminal is provided. The terminal includes a list generator for evaluating, when the mobile terminal is turned on, received signal strengths of all channels registered to a preferred roaming list and for creating a candidate channel list listing channels, each having a received signal strength greater than a threshold value, a scanner for performing a full-scan process on the channels listed in the candidate channel list, and a power controller for performing, when the full-scan process fails to find a system, a power saving process, wherein the scanner and power controller perform the full-scan process and the power saving process alternately until a system is found.

In accordance with another exemplary embodiment of the present invention, a mobile terminal is provided. The terminal includes a list generator for updating, when a received signal strength reaches to a threshold level P of an acquired system, a candidate channel list by evaluating received signal strengths of all channels listed in a preferred roaming list and for selecting the channels having a received signal strength greater than a preset level, a scanner for performing, when the mobile terminal loses the system, a full-scan process on the channels of the updated candidate channel list, and a power controller for performing, when a system is not found in the full-scan process, a power saving process, wherein the scanner and the power controller perform the full-scan process and the power saving process alternately until a system is found.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features and advantages of certain exemplary embodiments of the present invention will be more apparent from the following description taken in conjunction with the accompanying drawings, in which:

FIG. 1 is a schematic diagram illustrating a communication environment for implementing a system scan method according to an exemplary embodiment of the present invention;

FIG. 2 is a block diagram illustrating a configuration of the mobile terminal according to an exemplary embodiment of the present invention;

FIG. 3 is a flowchart illustrating a first system scan procedure of a system scan method according to an exemplary embodiment of the present invention; and

FIG. 4 is a flowchart illustrating a second system scan procedure of a system scan method according to an exemplary embodiment of the present invention.

Throughout the drawings, like reference numerals will be understood to refer to like parts, components and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

In a system scan method of an exemplary embodiment of the present invention, the mobile terminal can scan channels having a Received Signal Strength Indicator (RSSI) value equal to or greater than -105 dB in a full-scan mode and equal to or greater than -100 dB in a micro-scan mode.

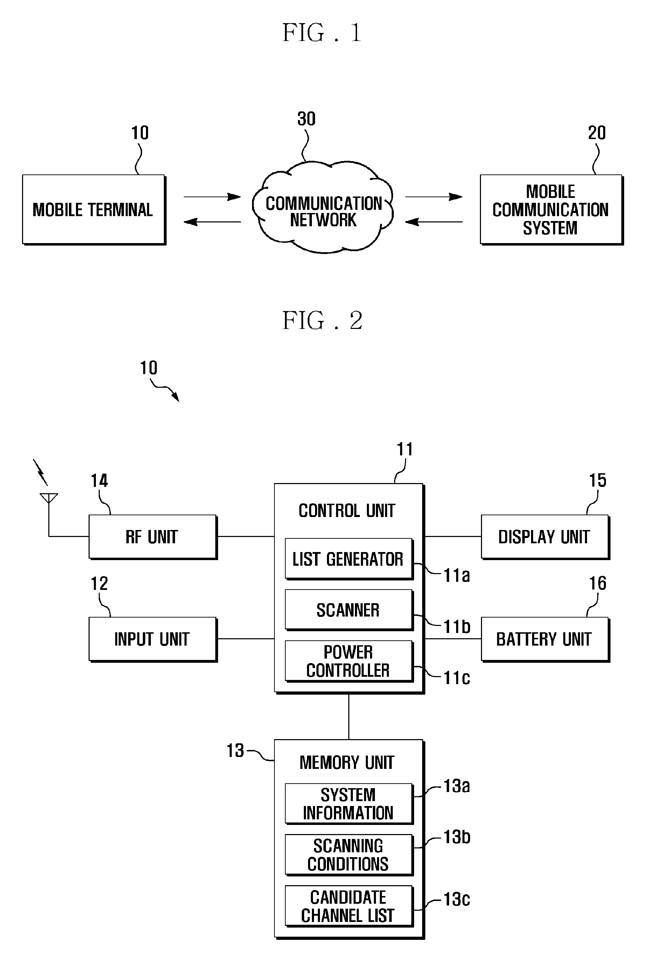

FIG. 1 is a schematic diagram illustrating a communication environment for implementing a system scan method according to an exemplary embodiment of the present invention.

Referring to FIG. 1, a mobile terminal 10 is connected to a mobile communication system 20 via a communication network 30.

The mobile communication system 20 includes a plurality of cells defined by a radio coverage area of respective base stations that are controlled by a Mobile Switching Center (MSC), such that the mobile terminal 10 can maintain connection to a service while roaming across the cells.

The mobile terminal 10 establishes a connection to the mobile communication system 20 to acquire system information and informs the mobile communication system 20 of its location and registration to receive communication service.

If the mobile terminal 10 loses the system due to disconnection with a base station, it performs the system scan to find the mobile communication system 20.

FIG. 2 is a block diagram illustrating a configuration of the mobile terminal according to an exemplary embodiment of the present invention.

Referring to FIG. 2, the mobile terminal 10 includes a control unit 11, an input unit 12, a memory unit 13, a Radio Frequency (RF) unit 14, a display unit 15, and a battery unit 16.

The control unit 11 is a microprocessor for controlling general operations of the mobile terminal 10. The control unit 11 performs a system scan to establish a connection to the mobile communication system and determines scanning conditions on the basis of the initial scan result. The system scan is initiated when the mobile terminal 10 is turned on and loses the system after acquiring the system information.

The input unit 12 is provided with a plurality of keys for generating a key signal in response to a key input by a user and transmits the key signal to the control unit 11. The input unit 12 may be implemented with at least one of a keypad, a pointing device such as a touchpad, and a touchscreen.

The memory unit 13 stores application programs associated with the operations of the mobile terminal and application data generated while the application programs are executed. More particularly, in this exemplary embodiment of the present invention, the memory unit 13 stores a list generation program for generating a candidate channel list 13c and the candidate channel list 13c created by the list generation program. The memory unit 13 also stores a system scan program for scanning on the basis of condition conditions 13b and the candidate channel list 13c. The memory unit 13 also stores system information acquired from a mobile communication system 20.

The RF unit 14 is responsible for radio communication of the mobile terminal with the mobile communication system 20. That is, the RF unit 14 performs scanning to find the mobile communication system 20 on the basis of the scanning conditions 13b when the mobile terminal 10 loses the system. The mobile terminal 10 acquires system information 13a from the found system, e.g. the communication system 20.

The display unit 15 displays various menus associated with the functions provided by the mobile terminal and data retrieved from the memory unit 13. The display unit 15 may be implemented with a Liquid Crystal Display (LCD) or a touchscreen-enabled LCD. In a case that the display unit 15 is implemented with the touchscreen-enabled LCD, it may be used as an input unit as well as a display unit.

The battery unit 16 supplies power to internal units of the mobile terminal 10.

The control unit 11 includes a list generator 11a, a scanner 11b, and a power controller 11c. The list generator 11a evaluates the RSSIs of the all channels registered to the PRL and generates the candidate channel list 13c with the channels of which RSSIs are greater that a preset value. The scanner 11b performs a full scan process on the channels grouped within the candidate channel list 13c. When the scanner 11b fails to acquire system information in the full scan process, the power controller 11c performs a power saving process. The full scan process and power saving process are performed alternately until the system information 13a is acquired. The list generator 11a stores the candidate channel list 13c within the memory unit 13. If a system is found in the full scan process, the scanner 11b stops scanning immediately and acquires the system information 13a from the found system.

As mentioned above, the control unit 11 controls to start the system scan when the mobile terminal 10 is turned on or loses previously acquired system information. The former is referred to as a first system scan procedure, and the latter is referred to as a second system scan procedure hereinafter.

If the mobile terminal 10 is turned on, the control unit 11 performs the first system scan procedure. In the first system scan procedure, the list generator 11 a first generates a candidate channel list 13c by grouping the channels of which RSSIs are greater than a threshold RSSI. Next, the scanner 11b performs a full-scan mode on the channels registered to the candidate channel list 13c. The candidate channel list 13c may be updated according to the result of the full-scan process to be used in the next full-scan.

The control unit 11 performs the second system scan procedure as following. While the mobile terminal 10 is associated with the system, the list generator 11a updates the candidate channel list 13c whenever the RSSI of the system becomes equal to a preset value. If the mobile terminal loses the system, the scanner 11b performs a full-scan process on the channels listed in the most recently updated candidate channel list 13c. After a power saving time has expired, the updated candidate channel list 13c is used in the next full-scan.

Here, the threshold RSSI for selecting the channels to be registered to the candidate channel list is -105 dB. In an exemplary implementation, the threshold RSSI (P) is selected in the range of -105 dB < P ≤ -100 dB. The value -105 dB is used to determine whether the system is lost, the value -100 dB is used to determine the weak electrical field area. If the threshold RSSI (P) is set to a value greater than - 100 dB, the candidate channel list is likely to be updated frequently, thereby increasing power consumption and processing load of the control unit 11.

The scanning conditions 13b of the mobile terminal 10 are preferably configured in consideration of the energy consumption of the battery unit 16. The scanning conditions 13b include a full scan time required for performing the full-scan process and a power saving time during which the mobile terminal operates in the power saving mode. In an exemplary implementation, the full scan time is set to a value less than the power saving time. For example, when the full scan time may be set to 5 seconds with the power saving time set to 36 seconds.

As described above, the mobile terminal 10 attempts to acquire system information by perform a full-scan process on the channels listed in the candidate channel list 13c rather than the PRL. Since the candidate channel list is generated by grouping the channels of which RSSIs are greater than a preset threshold, it is expected to quickly acquire the system information 13a. Particularly, since a number of the channels of the candidate channel list 13 is less than a number of the channels of the PRL, the mobile terminal 10 can perform a full-scan process on the all channels of the candidate channel list 13c. Typically, it takes about 150 ms to 200 ms to perform a full-scan process for a channel. Accordingly, when the full scan time is set to 5, the mobile terminal can perform the full-scan process on about 25 channels.

In an exemplary embodiment of the present invention, small number of channels selected from the PRL are scanned in a full-scan mode, whereby the mobile terminal can acquire the system information 13a quickly even in a weak electrical field area.

The first and second system scan procedure operations of the above structured mobile terminal are described hereinafter in more detail. The structures and functions of the mobile terminal 10 can be more clarified by the following description.

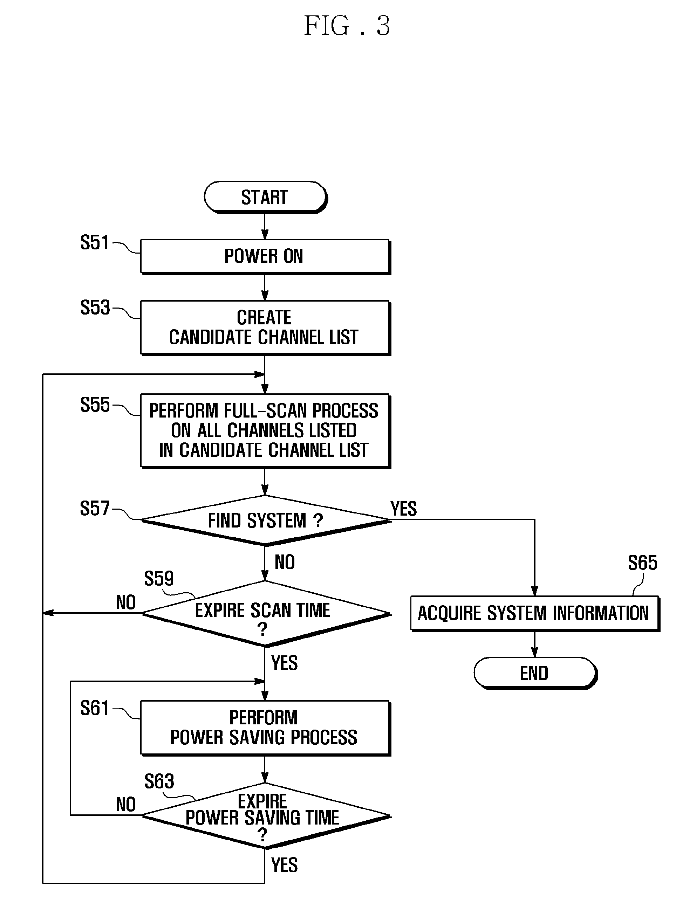

FIG. 3 is a flowchart illustrating a first system scan procedure of a system scan method according to an exemplary embodiment of the present invention.

Referring to FIGs. 1 to 3, the mobile terminal 10 first is turned on in step S51. That is, if a user pushes a turn-on key provided by the input unit 12 of the mobile terminal 10, the control unit 11 detects a turn-on key signal and controls such that the battery unit 16 supplies power to internal units of the mobile terminal.

Once the mobile terminal 10 is turned on, the control unit 11 generates a candidate channel list by means of the list generator 11a in step S53. That is, the list generator 11a evaluates the RSSIs of the all channels registered to the PRL, selects the channels of which RSSIs are greater than a threshold RSSI, and generates the candidate channel list with the selected channels. Assuming that 100 channels are registered to the PRL, it takes about 200 ms for the list generator 11a to create the candidate channel list. The list generator 11 a stores the candidate channel list into the memory unit 13.

After generating the candidate channel list, the control unit 11 controls such that the scanner 11b performs a full-scan process on the all channels listed in the candidate channel list in step S55. Next, the control unit 11 determines whether a system is found in the full-scan process in step S57. If no system is found, the control unit 11 determines whether a full scan time has expired in step S59. If the full scan time has not expired, the control unit 11 returns to step S55. Otherwise, if the full scan time has expired, the control unit 11 controls such that the scanner ends the full scan process and the power controller 11c performs power saving process in step S61. The control unit 11 determines whether the power saving time has expired while the mobile terminal 10 is in the power saving mode in step S63. If the power saving time has not expired, the control unit 11 returns to step S61.

If it is determined that the power saving time has expired at step S63, the control unit 11 controls such that the power controller 11c ends the power saving process, and the scanner 11b returns to step S55.

In contrast, the scanning process and power saving process are performed alternately until the system information is acquired. If a system is found at step S57, the control unit 11 controls such that the scanner 11b acquires system information from the found system, thereby the first system scan procedure ends.

Although the next scanning process starts from step S55 in FIG. 3, the present invention is no limited thereto. For example, the next scanning process can start from step S53. In this case, the list generator 11a updates the candidate channel list 13c at step S53 such that the scanner 11b performs the next scan with reference to the updated candidate channel list 13c. At this time, the update of the candidate channel list 13c can be done by using the PRL list or the previously generated candidate channel list.

In this exemplary embodiment, the scanning time is a duration configured to perform the full-scan. However, the scanning time may include a time to generate the candidate channel list 13c. In this case, the full scan time is equal to the time obtained by subtracting the list generation time from the scan time.

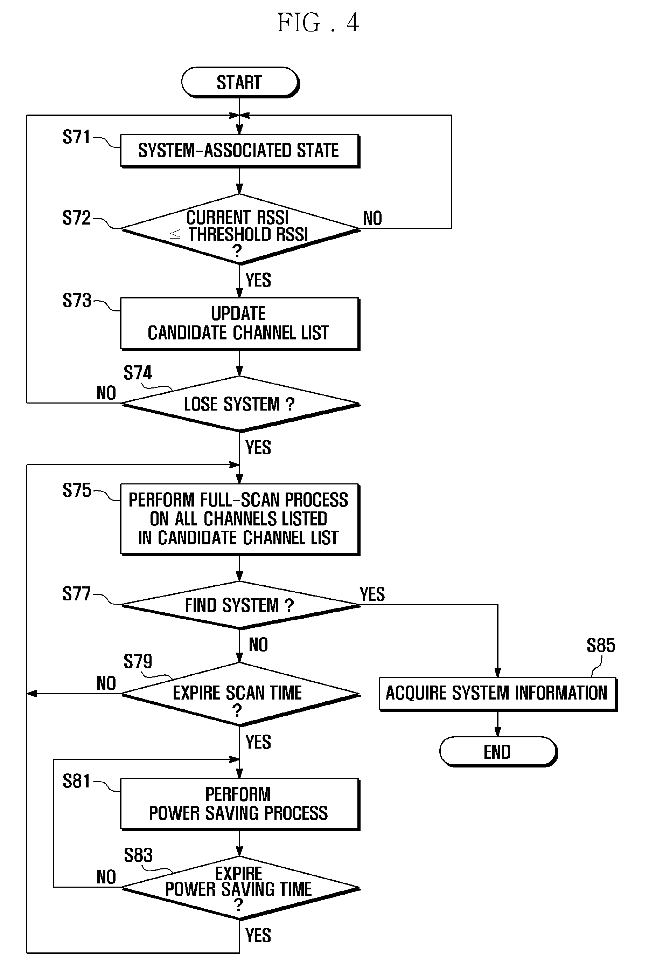

FIG. 4 is a flowchart illustrating a second system scan procedure of a system scan method according to an exemplary embodiment of the present invention.

Referring to FIGs. 1, 2 and 4, the second system scan procedure starts while the mobile terminal 10 is associated with a system in step S71.

The control unit 11 determines whether the current RSSI of the currently associated system is equal to or less than the threshold RSSI in step S72. If the current RSSI is greater than the threshold RSSI, the control unit 11 controls to maintain the association with the current system.

If the current RSSI is greater than the threshold RSSI, the control unit 11 controls such that the list generator 11a updates the candidate channel list in step S73. That is, the list generator 11a evaluates the RSSIs of the all channels of the PRL, selects the channels of which RSSIs are greater than a preset value, and updates the candidate channel list 13c with the selected channels. Whenever the RSSI of the currently associated system becomes equal to or less than the threshold RSSI, the control unit 11 updates the candidate channel list 13c with reference to the RSSIs of the channels registered to the PRL and stores the updated candidate channel list 13c within the memory unit 13.

Next, the control unit 11 determines whether the system has been lost in step S74. That is, the scanner 11b of the control unit 11 monitors to detect whether the received signal strength of the currently associated system becomes less than -105 dB and determines, if the received signal strength is less than -105 dB, that the system is lost. If it is determined that the system is not lost, the control unit 11 maintains the connection to the system in step S71.

In contrast, if the system is lost, the control unit 11 controls the scanner 11b to perform the full-scan process on the all channels of the most recently updated candidate channel list 13c. Since steps S75 to S85 of FIG. 4 are substantially identical with steps S57 to S65, detailed explanations of the process following step S75 are omitted. When performing the full-scan process again at step S75 following the power saving step S81. The most recently updated candidate channel list 13c is used.

Although exemplary embodiments of the present invention have been described in detail hereinabove, it should be clearly understood that many variations and/or modifications of the basic inventive concepts herein taught which may appear to those skilled in the present art will still fall within the spirit and scope of the present invention, as defined in the appended claims and their equivalents.

As described above, the system scan method of an exemplary embodiment of the present invention performs scanning on the channels of which RSSIs are greater than a preset threshold RSSI, thereby acquiring system information quickly.

Also, the system scan method of an exemplary embodiment of the present invention enables the mobile terminal to perform a full-scan process on the channels of which RSSIs are greater than a preset threshold RSSI, the fast system acquisition can be done even in a weak electrical field area.

## Claims

1. A system scan method for a mobile terminal, the method comprising:
evaluating received signal strengths of all channels registered to a Preferred Roaming List (PRL);
creating a candidate channel list listing channels having a received signal strength greater than a preset level;
performing a full-scan process on all channels listed in the candidate channel list; and
performing, when the full-scan process fails to find a system, a power saving process,
wherein the full-scan process and the power saving process are performed alternately until the system is found.

2. The method of claim 1, wherein the candidate channel list is used in next full-scan process.

3. The method of claim 1, further comprising updating the candidate channel list after the performing of the power saving process.

4. The method of any of claims 1 to 3, further comprising acquiring, when the full-scan process finds the system, system information from the found system.

5. The method of claim 4, wherein the full-scan process duration is about 5 seconds, and the power saving process duration is about 36 seconds.

6. The method of any of claims 1 and 2, wherein the candidate channel list is updated when the mobile terminal is turned on or the received signal strength of a currently associated system becomes equal to or less than a threshold level P.

7. The method of claim 6, wherein the full-scan process is performed when the mobile terminal loses the currently associated system using a most recently updated candidate channel list.

8. The method of claim 6, wherein the preset level is about -105 dB.

9. The method of claim 7, wherein the preset level is about -105 dB, and the threshold level P is selected in the range of -105 dB < P ≤ -100 dB.

10. A mobile terminal, the terminal comprising:
a list generator for checking, when the mobile terminal is turned on, received signal strengths of all channels registered to a preferred roaming list and for creating a candidate channel list listing channels having a received signal strength greater than a threshold value;
a scanner for performing a full-scan process on the channels listed in the candidate channel list; and
a power controller for performing, when the full-scan process fails to find a system, a power saving process,
wherein the scanner and the power controller perform the full-scan process and the power saving process alternately until a system is found.

11. The terminal of claim 10, wherein the candidate channel list is used in next full-scan process.

12. The terminal of claim 10, wherein the list generator updates the candidate channel list after the performing of the power saving process, and the scanner performs the full-scan process using the updated candidate channel list.

13. The terminal of any of claims 10 to 12, wherein the scanner acquires, when a system is found in the full-scan process, system information from the found system.

14. The terminal of any of claims 10 and 11, wherein the list generator updates the candidate channel list when the mobile terminal is turned on or the received signal strength of the currently associated system becomes equal to or less than a threshold level.

15. The terminal of claim 14, wherein the scanner performs, when the mobile terminal loses the currently associated system, the full-scan process using the most recently updated candidate channel list.
